(19)

Europäisches
Patentamt

European
Patent Office

Office européen
des brevets

(11) **EP 4 773 453 A1**

(12) **EUROPEAN PATENT APPLICATION**

(43) Date of publication:
**08.07.2026 Bulletin 2026/28**

(21) Application number: **26150116.7**

(22) Date of filing: **02.01.2026**

(51) International Patent Classification (IPC):
***H02H 7/04*** *(2006.01)*

(52) Cooperative Patent Classification (CPC):
**H02H 7/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.01.2025 US 202563742079 P
17.12.2025 US 202519422869**

(71) Applicant: **Schweitzer Engineering Laboratories,
Inc.
Pullman, WA 99163 (US)**

(72) Inventors:
• **Kasztenny, Bogdan
Pullman, 99163 (US)**
• **Rosolowski, Eugeniusz
Pullman, 99163 (US)**

(74) Representative: **Smith, Jeremy Robert
Kilburn & Strode LLP
Lacon London
84 Theobalds Road
London WC1X 8NL (GB)**

(54) **ROUTE DISCOVERY IN PROGRAMMABLE NETWORKS**

(57)     Quotient differential protection of a dual-core phase shifting transformer (130) is described herein. Load-side currents and source-side currents are used without need of tap changer and control switch positions of the dual-core phase-shifting transformer being protected. The quotient differential signal is determined based on comparing the winding turn ratios in individual transformer phases, resulting in a differential signal that includes the products of currents. Similarly, the restraining signal comprises the products of currents.
Fig. 1

Figure 1

**Description**

TECHNICAL FIELD

This disclosure relates to differential protection of electric power delivery systems. Quotient differential and restraining signals are derived from ratios that are quotients of measured currents.

BRIEF DESCRIPTION OF THE DRAWINGS

Non-limiting and non-exhaustive embodiments of the disclosure are described, including various embodiments of the disclosure with reference to the figures, in which:

> **Figure 1** illustrates a simplified block diagram of an IED providing differential protection to a phase-shifting transformer in accordance with several embodiments.
> **Figure 2** illustrates a connection diagram of a symmetrical dual-core phase shifting transformer that may benefit from the protection described in accordance with several embodiments.
> **Figure 3** illustrates a simplified logic diagram of differential fault protection using quotient differential current signals and quotient restraining current signals in accordance with various embodiments.

In the following description, numerous specific details are provided for a thorough understanding of the various embodiments disclosed herein. However, those skilled in the art will recognize that the systems and methods disclosed herein can be practiced without one or more of the specific details, or with other methods, components, materials, etc. In addition, in some cases, well-known structures, materials, or operations may not be shown or described in detail to avoid obscuring aspects of the disclosure. Furthermore, the described features, structures, or characteristics may be combined in any suitable manner in one or more alternative embodiments.

DETAILED DESCRIPTION

Differential protection for electric power systems and related equipment generally compares currents into a protected zone with currents leaving the protected zone. A difference between such currents may indicate a fault within the protected zone which warrants a protective action to be taken. As is described in more detail below relating to phase-shifting transformers (PSTs), differential protection increases in complexity when inductive elements (windings on a magnetic core or cores) are used within the zone of protection. Inductive elements introduce ratios between the sensed current into a zone, and the sensed current leaving the zone. In some implementations those ratios may be fairly consistent, such as in the case of current transformers used to obtain current signals from locations in an electric power system. In other implementations, those ratios may be variable, such as when a PST, voltage regulator, on-line tap changer (OLTC), or the like are implemented within the zone being protected. These different ratios should be taken into account to properly execute differential protection by following the ampere-turn balance in the apparatus core. The embodiments described herein account for such ratios, whether variable or not, using a quotient differential signal. Although several embodiments are described using PSTs, the embodiments herein may be applied to differential protection of electrical power delivery systems broadly.

PSTs continue to proliferate as a means to control power flow in ever more congested electric power grids. Dual-core PSTs offer greater operational security at higher voltages compared with single-core PSTs. Dual-core PSTs are composed of a series transformer (ST) and an excitation transformer (ET), each using its own core and contained in its own tank. The ST primary (series) winding has a midpoint to connect the ET primary winding. The ET secondary winding provides a quadrature voltage to the ST secondary winding to regulate the phase shift across the ST. An OLTC controls the PST angle by adjusting the quadrature voltage magnitude. A single three-phase switch allows changing the quadrature voltage polarity to advance or retard the PST angle.

As generally discussed above, differential protection of PSTs cannot use the standard logic for differential protection of power transformers because of its unique winding connections, the wide range of the OLTC operation within the ET, and the control switch that changes the quadrature voltage polarity to either advance or retard the PST angle.

What is needed is differential protection methods for dual-core PSTs specifically that is independent of the OLTC and control switch positions while properly following the ampere-turn balance principle. Differential protection methods for dual-core PSTs are described herein, in which the protection equations are derived from the first principle of ampere-turn balance for each of the two cores. Operating equations are also derived for a single differential zone that covers both transformers of the PST. This zone uses only the source- and load-side current transformers (CTs) and can trip directly or act as a check zone. Generally, the embodiments herein do not rely on knowing tap positions or positions of a control switch, or even knowledge of the winding ratios of CTs used to obtain the current signals as long as these ratios are identical in all three phases.

With regard to PSTs, the embodiments described herein eliminate the need to know the PST angle for differential protection of the PST. Past solutions require a protective relay to obtain the PST angle from the OLTC and the advance/retard control switch position signals or from the voltages and currents at the load and source terminals of the PST prior to a disturbance. The need for these additional signals is eliminated in the embodiments herein by using a quotient differential element that is based on the product rather than the sum of the currents. The new principle allows a simpler and more reliable PST protection implementation.

When the dual-core PST is in the neutral position, the regulating winding current does not flow through any turns of the ET regulating (secondary) winding. As a result, the ampere-turn balance does not apply to the ET. Effectively, when the PST is in the neutral position, the ET becomes a shunt reactor composed only of the ET primary winding. However, the regulating winding is still at high potential and requires protection. Protection issues for the ET windings during this operating scenario are also discussed herein.

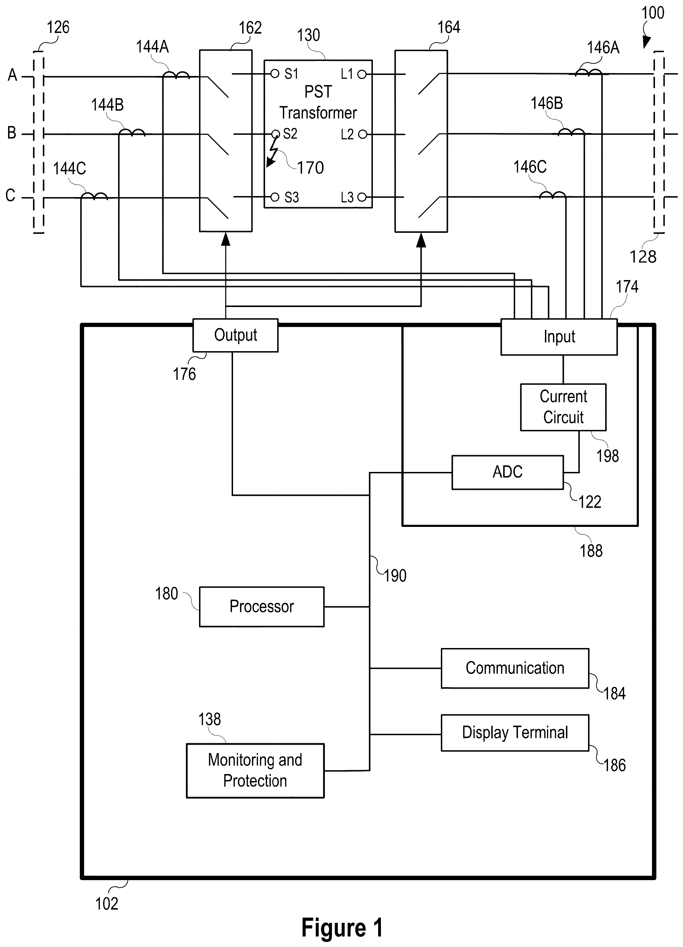

**Figure 1** illustrates a simplified block diagram of a power system 100 that includes a transformer 130, which may be a PST such as a dual-core PST between a source 126 and a load 128. The transformer 130 is monitored and protected using IED 102. As used herein, an IED may refer to any microprocessor-based device that monitors, controls, automates, and/or protects monitored equipment within the power system 100, such as a transformer relay that includes protection modules such as differential protection modules. The term IED may be used to describe an individual IED or a system comprising multiple IEDs. IED 120 may obtain electric power system information using CTs 144A-C and 146A-C, potential transformers (PTs, not separately illustrated), and the like. As described in more detail herein, the IED 102 may detect events in the transformer 130 using current and/or voltage signals. It should be noted that current and/or voltage signals from various other portions of the PST may be made available to the IED such as from excitation also include an excitation core and windings, and the IED 102 may obtain signals related to currents and/or voltages on the excitation and regulating windings, neutral, ground, and the like.

Several different kinds of fault (e.g. fault 170) may occur within the zone protected by the IED 102. For example a fault may be external or internal to the transformer. A fault may include one or more phases and may include ground. Faults may occur as short circuit events between windings or other internal components of the transformer. IED 102 may use a differential protection module to determine a fault condition on the transformer.

The IED 102 may include an output 176 for electrically signaling the circuit breakers (CBs) 162 and 164 to open upon detection of a fault, thereby electrically isolating the transformer 130 from the source 126 and load 128. Electrically isolating the transformer 130 protects the transformer by removing sources of electric power from feeding the fault(s). Excessive power allowed to continue feeding a fault would cause further damage to components of the transformer.

The IED 102 may further include one or more processors 180, a computer-readable medium (e.g., memory), a communication interface 184, a display terminal 186, and signal acquisition circuitry 188 communicatively coupled to each other via one or more communication buses 190. The processor 180 may be embodied as a microprocessor, a general-purpose integrated circuit, an application specific integrated circuit (ASIC), a field programmable gate array (FPGA), and/or other programmable logic devices. It should be noted that the processor 180 may be a single contained processing module including memory and other components or may be incorporated wholly or partially within any of the other elements within the IED 102.

The processor 180 may be operably coupled with memory to perform various algorithms. Such programs or instructions executed by the processor 180 may be stored in any suitable article of manufacture that includes one or more tangible, computer-readable media at least collectively storing the instructions or routines.

One such module that may be executed by the processor is a monitoring and protection module 138. The monitoring and protection module 138 may include instructions that, when executed by the processor, cause the IED to perform monitoring and protection functions such as differential protection, overcurrent protection, fault location, and the like. When the protection results in a trip command, the processor may signal the output 176 to actuate the breakers 162, 164. Several embodiments herein describe differential protection that may be implemented by execution of the monitoring and protection module 138.

In the illustrated embodiment, the IED 102 includes signal acquisition circuitry 188 that measures input signals associated with the transformer 130 protection zone. The signal acquisition circuitry 188 may include a circuit conversion circuit 198 (e.g., transformer) that transform the input signals to levels that may be sampled by the IED 102. The signal acquisition circuitry 188 may include analog-to-digital converter(s) 122 that sample the current signals and produce digital signals representative of primary sensed by the CTs 144A-C, 146A-C, which may be used by the processor 180. Signal acquisition circuitry 188 may include additional modules for properly conditioning obtained signals for use by the processor 180 and provide isolation between the input 174 and the electronic components of the IED 102.

In some embodiments, IED 102 may include a communication interface 184, such as a fiber optic transceiver, to communicate with other IEDs. Further, IED 102 may include a display terminal 186 and input structures (e.g., Universal-Serial-Bus (USB) ports, buttons, touchscreens, etc.) to allow operators to review events on the transformer 130, change settings, etc.

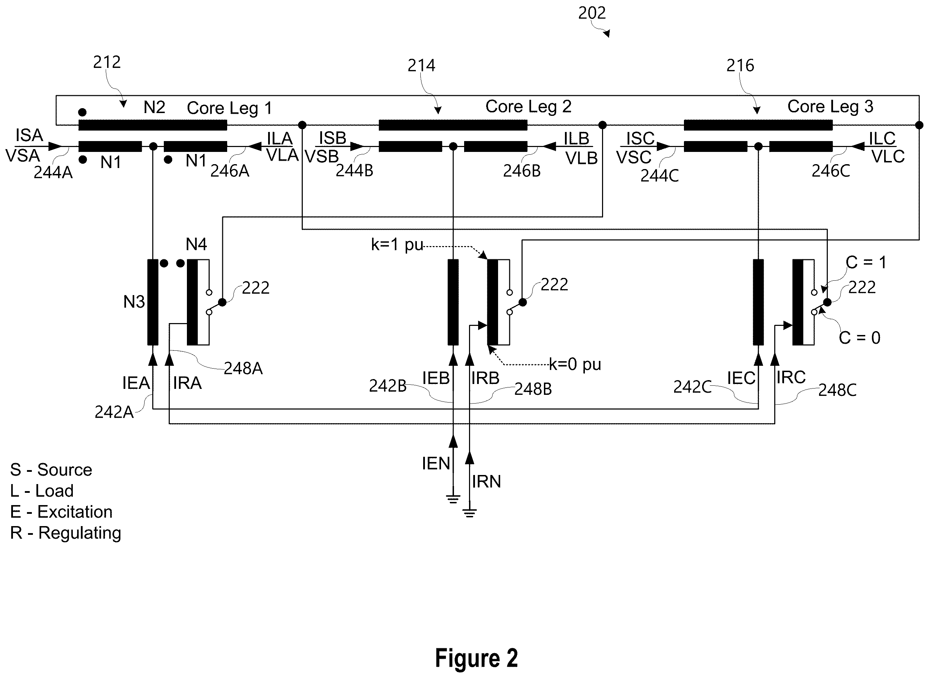

**Figure 2** illustrates a connection diagram of a symmetrical dual-core phase shifting transformer 202 with that may benefit from the protection described in accordance with several embodiments. The figure introduces variables, including the winding turns ($N_1$ through $N_4$), the per-unit regulation variable k, and the control switch position C 222. Also illustrated is the location and polarity convention for the measured currents. The current subscripts denote the source (S) 244A, 244B, 244C and load (L) 246A, 246B, 246C terminals and the excitation (E) 242A, 242B, 242C and regulating (R) 248A, 248B, 248C windings.

The CTs that measure the ET currents are located at the ground potential and not in the leads between the ST and the ET. This use of CTs is economical because the CTs do not have to be rated for the system voltage. The operating equations that in this application may be reworked for different CT locations than those shown in **Figure 2.**

Both the ST and ET are constructed to allow the zero-sequence flux through their cores, permitting the zero-sequence current to flow. Because the ST includes a delta-connected winding, the ST can use a three-legged core (212, 214, 216). In many cases, however, the ST is wound on a five-legged core even though it includes a delta winding. The ET contains two grounded wye-connected windings. Therefore, the ET is wound on a five-legged core (typically), contains a buried delta winding, or uses magnetic shunts to protect the tank from overheating during system unbalance conditions.

When analyzing or modeling the dual-core PST, it can be assumed that both cores are effectively five-legged cores (have a delta winding or five legs). Further, three-phase transformers with five core legs may be modeled as if they were built by using three separate single-phase transformers.

Generally, a transformer differential (87T) protection element balances ampere-turns between pairs of core legs. Following the ampere-turn balance is a method that has been used to not only select proper 87T element compensation equations for standard power transformers but to derive compensation equations for nonstandard transformers such as PSTs. Following are equations for the general differential signals for ST differential elements (87T(S)), excitation transformer differential elements (87T(E)), and overall transformer differential elements (87T(O)).

Equation 1 may be used to calculate ST differential signals for each loop, where compensating matrices [A] and [B] are defined in Equations 2 and 3:

$$\begin{bmatrix} i_{ST1} \\ i_{ST2} \\ i_{ST3} \end{bmatrix} = [\mathbf{A}] \cdot \left( \begin{bmatrix} i_{SA} \\ i_{SB} \\ i_{SC} \end{bmatrix} - \begin{bmatrix} i_{LA} \\ i_{LB} \\ i_{LC} \end{bmatrix} \right) - \frac{N_2}{N_1} \cdot [\mathbf{B}] \cdot \begin{bmatrix} i_{RA} \\ i_{RB} \\ i_{RC} \end{bmatrix} \qquad \text{Eq. 1}$$

$$[\mathbf{A}] = \begin{bmatrix} 1 & -1 & 0 \\ 0 & 1 & -1 \\ -1 & 0 & 1 \end{bmatrix} \qquad \text{Eq. 2}$$

$$[\mathbf{B}] = \begin{bmatrix} 0 & 0 & 1 \\ 1 & 0 & 0 \\ 0 & 1 & 0 \end{bmatrix} \qquad \text{Eq. 3}$$

where:

$i_{ST1}$ is the ST differential signal for loop 1;
$i_{ST2}$ is the ST differential signal for loop 2;
$i_{ST3}$ is the ST differential signal for loop 3;
and **Figure** 2 shows the remaining measurements and variables:

$i_{SA}$ is the A-phase source current;
$i_{SB}$ is the B-phase source current;
$i_{SC}$ is the C-phase source current;
$i_{LA}$ is the A-phase load current;
$i_{LB}$ is the B-phase load current;
$i_{LC}$ is the C-phase load current;
$i_{RA}$ is the A-phase regulating current;
$i_{RB}$ is the B-phase regulating current;
$i_{RC}$ is the C-phase regulating current;
$N_1$ is the number of winding turns; and
$N_2$ is the number of winding turns.

Equations 4 and 5 may be used to calculate ET differential signals for each loop, where Equation 5 may be used if the ET is wound on a five-legged core or is constructed from three single-phase transformers:

$$
\begin{bmatrix} i_{ET1} \\ i_{ET2} \\ i_{ET3} \end{bmatrix} = [\mathbf{A}] \left( \begin{bmatrix} i_{SA} \\ i_{SB} \\ i_{SC} \end{bmatrix} + \begin{bmatrix} i_{LA} \\ i_{LB} \\ i_{LC} \end{bmatrix} + \frac{N_4}{N_3} \cdot (k - C) \cdot \begin{bmatrix} i_{RA} \\ i_{RB} \\ i_{RC} \end{bmatrix} \right)
$$

Eq. 4

$$
\begin{bmatrix} i_{ET4} \\ i_{ET5} \\ i_{ET6} \end{bmatrix} = \begin{bmatrix} i_{SA} \\ i_{SB} \\ i_{SC} \end{bmatrix} + \begin{bmatrix} i_{LA} \\ i_{LB} \\ i_{LC} \end{bmatrix} + \frac{N_4}{N_3} \cdot (k - C) \cdot \begin{bmatrix} i_{RA} \\ i_{RB} \\ i_{RC} \end{bmatrix}
$$

Eq. 5

where:

$i_{ET1}$ is the ET differential signal for loop 1;
$i_{ET2}$ is the ET differential signal for loop 2;
$i_{ET3}$ is the ET differential signal for loop 3;
$i_{ET4}$ is the ET differential signal for loop 4;
$i_{ET5}$ is the ET differential signal for loop 5;
$i_{ET6}$ is the ET differential signal for loop 6;
and **Figure 2** shows the remaining measurements and variables:

k is the quadrature voltage level in per unit;
C is the direction of regulation (C=0 or C=1)
$N_3$ is the number of winding turns as; and
$N_4$ is the number of winding turns.

Finally, the overall transformer differential element may be expressed in Equation 6:

$$
\begin{bmatrix} i_{PST1} \\ i_{PST2} \\ i_{PST3} \end{bmatrix} = [\mathbf{A}] \cdot \left( \begin{bmatrix} i_{SA} \\ i_{SB} \\ i_{SC} \end{bmatrix} + \begin{bmatrix} i_{LA} \\ i_{LB} \\ i_{LC} \end{bmatrix} \right) + [\mathbf{D}] \cdot \left( \begin{bmatrix} i_{SA} \\ i_{SB} \\ i_{SC} \end{bmatrix} - \begin{bmatrix} i_{LA} \\ i_{LB} \\ i_{LC} \end{bmatrix} \right)
$$

Eq. 6

with:

$$
[\mathbf{D}] = \frac{N_1}{N_2} \cdot \frac{N_4}{N_3} \cdot (k - C) \cdot \begin{bmatrix} 1 & 1 & -2 \\ -2 & 1 & 1 \\ 1 & -2 & 1 \end{bmatrix}
$$

If the ET core allows applying Equation 5 over 4, a simpler version of the 87T(O) element may be expressed as Equation 7:

$$
\begin{bmatrix} i_{PST4} \\ i_{PST5} \\ i_{PST6} \end{bmatrix} = \begin{bmatrix} i_{SA} \\ i_{SB} \\ i_{SC} \end{bmatrix} + \begin{bmatrix} i_{LA} \\ i_{LB} \\ i_{LC} \end{bmatrix} + [\mathbf{D}] \cdot \left( \begin{bmatrix} i_{SA} \\ i_{SB} \\ i_{SC} \end{bmatrix} - \begin{bmatrix} i_{LA} \\ i_{LB} \\ i_{LC} \end{bmatrix} \right)
$$

Eq. 7

with:

$$
[\mathbf{D}] = \frac{N_1}{N_2} \cdot \frac{N_4}{N_3} \cdot (k - C) \cdot \begin{bmatrix} 0 & 1 & -1 \\ -1 & 0 & 1 \\ 1 & -1 & 0 \end{bmatrix}
$$

where:

$i_{PST1}$ is the overall differential signal for loop 1;
$i_{PST2}$ is the overall differential signal for loop 2;
$i_{PST3}$ is the overall differential signal for loop 3.
$i_{PST4}$ is the overall differential signal for loop 4;
$i_{PST5}$ is the overall differential signal for loop 5; and
$i_{PST6}$ is the overall differential signal for loop 6.

The 87T(E) element described above requires the tap changer position input (variable k) and the position of the control switch (variable C). The tap changer position indicator can provide this input, or the relay can derive this input from the phase angle difference between the terminal S and L voltages and currents in the steady-state condition just prior to the fault. Neither solution is ideal. The embodiments provided herein avoid the need for the tap changer and the control switch positions.

Assuming a healthy transformer (i.e. assuming the differential signals are exactly zero), Equation 4 may be used to solve for the ratio-matching factor. Using the first 87T(E) loop ($i_{ET1} = 0$):

$$\frac{N_4}{N_3} \cdot (k - C) = -\frac{i_{SA} + i_{LA} - i_{SB} - i_{LB}}{i_{RA} - i_{RB}} \qquad \text{Eq. 8}$$

Similarly, using the second 87T(E) loop ($i_{ET2} = 0$):

$$\frac{N_4}{N_3} \cdot (k - C) = -\frac{i_{SB} + i_{LB} - i_{SC} - i_{LC}}{i_{RB} - i_{RC}} \qquad \text{Eq. 9}$$

Next, Equations 8 and 9 may be compared to provide Equation 10:

$$0 = (i_{SB} + i_{LB} - i_{SC} - i_{LC}) \cdot (i_{RA} - i_{RB}) -$$
$$(i_{SA} + i_{LA} - i_{SB} - i_{LB}) \cdot (i_{RB} - i_{RC}) \qquad \text{Eq. 10}$$

Even though it is nonlinear (involves products of measured currents), Equation 10 is a balance equation for a healthy transformer. Therefore, it may be used for a new type of 87T element by introducing a differential signal $q_{ET}$ as follows:

$$q_{ET} = (i_{SB} + i_{LB} - i_{SC} - i_{LC}) \cdot (i_{RA} - i_{RB}) -$$
$$(i_{SA} + i_{LA} - i_{SB} - i_{LB}) \cdot (i_{RB} - i_{RC}) \qquad \text{Eq. 11}$$

In various embodiments, this protection element may be referred to as a quotient differential element because it is derived by comparing two ratios (Equations 8 and 9) that are quotients of the measured currents. The quotient differential elements described herein use quotient differential signals, such as $q_{ET}$ (Equation 11) that are balance signals due to their being balances of turn ratio equations (e.g. Equations 8 and 9). Additional such balance signals are described below.

Indices of equation 10 may be rotated and obtain the 87T differential signals for the second and third loops. However, the second and third loops work out to be exactly the same as the first loop. This is because the first loop already used all the available information (the turn ratio based on the ampere-turn balance between legs 1 and 2 equals the turn ratio based on the ampere-turn balance between legs 2 and 3). Therefore, the quotient differential element (Equation 11) has only one loop.

The key advantage of this novel approach compared to the traditional 87T(E) element is avoiding the need for the tap changer and control switch positions or even the nominal turn ratio. Equation 11 only includes primary currents and requires no other data. Of course, it will work on secondary currents too assuming the CT ratios are the same in phases A, B, and C.

The independence of Equation 11 from the turn ratio may suggest that the quotient differential element is insensitive to turn faults. It is not so. The quotient differential element detects turn faults by monitoring if the turn counts are the same in all three core legs (without considering what these counts are in absolute terms). If the turns on any of the legs change relative to the other legs, the differential signal in Equation 11 is no longer zero and the quotient differential element has a chance to operate.

If the ET core allows applying Equation 5 over Equation 4 (i.e., if the core is a five-legged core), a simpler version of the ET quotient differential element may be used as follows:

$$q_{ET1} = (i_{SB} + i_{LB}) \cdot i_{RA} - (i_{SA} + i_{LA}) \cdot i_{RB} \qquad \text{Eq. 12}$$

$$q_{ET2} = (i_{SC} + i_{LC}) \cdot i_{RB} - (i_{SB} + i_{LB}) \cdot i_{RC} \qquad \text{Eq. 13}$$

$$q_{ET3} = (i_{SA} + i_{LA}) \cdot i_{RC} - (i_{SC} + i_{LC}) \cdot i_{RA} \qquad \text{Eq. 14}$$

When using Equation 5 instead of 4, the quotient differential element has three loops because it effectively compares the turn ratios between equivalent single-phase cores.

Assuming a healthy transformer, Equations 15 and 16 may be used to solve for the ratio-matching factor. Using the first 87T loop ($i_{PST1} = 0$):

$$\frac{N_1}{N_2} \cdot \frac{N_4}{N_3} \cdot (k - C) = -\frac{i_{SA} + i_{LA} - i_{SB} - i_{LB}}{i_{SA} + i_{SB} - 2i_{SC} - i_{LA} - i_{LB} + 2i_{LC}} \qquad \text{Eq. 15}$$

Similarly, using the second 87T loop ($i_{PST1} = 0$):

$$\frac{N_1}{N_2} \cdot \frac{N_4}{N_3} \cdot (k - C) = -\frac{i_{SB} + i_{LB} - i_{SC} - i_{LC}}{i_{SB} + i_{SC} - 2i_{SA} - i_{LB} - i_{LC} + 2i_{LA}} \qquad \text{Eq. 16}$$

Next, Equations 15 and 16 may be compared:

$$q_{PST} = (i_{SA} + i_{LA} - i_{SB} - i_{LB}) \cdot (i_{SB} + i_{SC} - 2i_{SA} - i_{LB} - i_{LC} + 2i_{LA})$$
$$- (i_{SB} + i_{LB} - i_{SC} - i_{LC}) \cdot (i_{SA} + i_{SB} - 2i_{SC} - i_{LA} - i_{LB} + 2i_{LC}) \qquad \text{Eq. 17}$$

The key advantage of this novel approach compared to the traditional 87T(O) element is the same as that for the quotient differential element for the ET: it avoids the need for the tap changer and control switch positions or even the nominal turn ratio. Equations 11 and 17 only include primary currents and do not require any other data. Of course, it will work on secondary currents too assuming the CT ratios are the same in phases A, B, and C.

If the ET core allows applying Equation 5 over 4, a simpler version of the overall quotient differential element is obtained by using Equation 7 as follows:

$$q_{PST1} = (i_{SA} + i_{LA}) \cdot (i_{SC} - i_{LC} - i_{SA} + i_{LA}) - (i_{SB} + i_{LB})$$
$$\cdot (i_{SB} - i_{LB} - i_{SC} + i_{LC}) \qquad \text{Eq. 18}$$

$$q_{PST2} = (i_{SB} + i_{LB}) \cdot (i_{SA} - i_{LA} - i_{SB} + i_{LB}) - (i_{SC} + i_{LC})$$
$$\cdot (i_{SC} - i_{LC} - i_{SA} + i_{LA}) \qquad \text{Eq. 19}$$

$$q_{PST3} = (i_{SC} + i_{LC}) \cdot (i_{SB} - i_{LB} - i_{SC} + i_{LC}) - (i_{SA} + i_{LA})$$
$$\cdot (i_{SA} - i_{LA} - i_{SB} + i_{LB}) \qquad \text{Eq. 20}$$

The 87T elements may be implemented based on Equations 11, 12 to 14, 17, and 18 to 20 in the time domain (the right-hand sides use samples) or in the frequency domain (the right-hand sides use phasors). To avoid signals that are in amperes squared, one can take the square root of the absolute value of the q signals in the time domain or the square root of the magnitude of the q signals in the frequency domain.

Application of differential protection may include use of a restraining signal. In accordance with several embodiments, a restraining signal may be calculated from each individual current that makes up the differential signal. For example, a restraining signal for the differential signal may be calculated using Equation 21:

$$i_{RST} = |i_{SA}| + |i_{LA}| + |i_{SB}| + |i_{LB}| + \frac{N_2}{N_1} \cdot |i_{RC}|$$ Eq. 21

where | | stands for the absolute value of a sample or the magnitude of a phasor, for the time-domain and the frequency-domain implementations, respectively.

In certain embodiments, the concept of 1) deriving a partial restraining term for each individual current based on that current level relative to the nominal current of the CT that measures the current and 2) summing such terms to obtain the restraining signal for the differential element may be applied. This approach allows estimating the possible error in the differential signal with more accuracy, and by doing so, it allows applying lower slope settings to increase protection sensitivity.

Restrained differential protection in accordance with several embodiments herein may include estimating the maximum possible error in the differential signal and use it as a variable threshold for the differential signal. Therefore, a restraining signal for the quotient differential protection element may be derived by calculating the maximum error in the quotient differential signal based on errors for each current involved in the nonlinear equation.

Assume for simplicity that the quotient operating signal involves four currents, $i_1$ through $i_4$, as follows:

$$q = (i_1 + i_2) \cdot (i_3 + i_4)$$ Eq. 22

Assuming $e_1$ to $e_4$ are error estimates for each of the currents:

$$q_{ERROR} = (|e_1| + |e_2|) \cdot |i_3 + i_4| + (|e_3| + |e_4|) \cdot |i_1 + i_2|$$ Eq. 23

If it is further assumed that 1) the errors are ratio errors, i.e., an error is proportional to the current such as $|e_1| = s \cdot |i_1|$, and that 2) errors are of the same polarity and therefore do not cancel (subtract):

$$q_{ERROR} = (s \cdot |i_1| + s \cdot |i_2|) \cdot |i_3 + i_4| + (s \cdot |i_3| + s \cdot |i_4|) \cdot |i_1 + i_2|$$ Eq. 24

Because the percentage-restrained protection principle is followed, the error may be the product of the ratio error s and an expression that may be referred to as the restraining signal (discussed hereafter):

$$q_{ERROR} = s \cdot q_{RST}$$ Eq. 25

Comparing Equations 24 and 25, the restraining signal for the quotient differential protection may be obtained based on Equation 22 as:

$$q_{RST} = (|i_1| + |i_2|) \cdot |i_3 + i_4| + (|i_3| + |i_4|) \cdot |i_1 + i_2|$$ Eq. 26

This restraining concept can also be applied to the quotient differential protection. The $e_1$ to $e_4$ errors may be established based on the level of each current respective to its CT nominal current and use formula 23 to obtain the restraining signal to be compared directly with the differential signal 22.

The general formula 26 may be applied to the ET quotient differential element 12. The restraining signal for the differential signal 12 is illustrated in Equation 27:

$$q_{RST1} = (|i_{SB}| + |i_{LB}|) \cdot |i_{RA}| + |i_{SB} + i_{LB}| \cdot |i_{RA}|$$
$$+ (|i_{SA}| + |i_{LA}|) \cdot |i_{RB}| + |i_{SA} + i_{LA}| \cdot |i_{RB}|$$ Eq. 27

Microprocessor-based differential relays often include an external fault-detection (EFD) logic for security during external faults that may cause CT saturation. The EFD logic monitors the change in the differential signal and the change in the restraining signal. During internal faults, the two signals change simultaneously. If the restraining signal changes and the differential signal does not follow in a few milliseconds, the EFD logic declares an external fault and triggers additional security measures. These security measures include desensitizing (typically) or blocking the differential element. The EFD logic enhances protection security and sensitivity by allowing sensitive settings (small percentage restraint) without jeopardizing security for external faults.

The EFD logic operates by using the differential and restraining signals of the traditional differential elements. The EFD logic may be used to desensitize the traditional differential elements and to desensitize or block the quotient differential elements.

The ET is connected between the system potential (midpoint of the series winding; see **Figure 2)** and ground. Therefore, the ET is subject to magnetizing inrush and stationary over-excitation. A magnetizing inrush current can be present in the ET excitation winding during the following conditions:

- Initial PST energization.
- Voltage recovery after clearing a close-in external fault.
- Energization of a nearby transformer (PST or a power transformer), i.e., sympathetic inrush.
- Switching events that lead to a voltage angle jump that delays the voltage zero crossing and therefore elevates the ET flux.
- Ground faults (both internal faults close to the ST windings and close-in external faults) that result in a voltage swell in the healthy phases based on the system zero-sequence impedance.

Because the ET regulating winding is connected back to the ST secondary winding, a feedback loop exists between the ST and the ET. This feedback loop can affect the inrush current in the ET as compared with a traditional power transformer. For example, utilities typically energize their PST in the neutral position (k = 0 pu and C = 0 or k = 1 pu and C = 1). When the PST is in the neutral position, the regulating current is not linked to the excitation current but is forced by the secondary winding of the ST. The ET inrush current flows through the ST series winding and is transformed to the ST secondary winding. As a result, the inrush current in the ET excitation winding is balanced by the inrush current flowing in the regulating winding. Therefore, the 87T(E) element is balanced even though the ET experiences inrush.

In general, the same magnetizing inrush restraining methods for the ET may be used as for power transformers in accordance with several embodiments (even harmonic blocking or restraining).

Similarly, the ET is subject to stationary overexcitation because of increased voltage or decreased frequency. The feedback loop between the ET and ST can also affect the stationary overexcitation phenomenon. In general, the same overexcitation restraining methods for the ET may be used as for power transformers (odd harmonic blocking or restraining).

The magnetizing inrush and overexcitation currents affect both the traditional differential element and the quotient differential element. In order to restrain or block the quotient differential element with harmonics, the transformer relay requires the traditional differential signal (Equation 4), which involves the tap position (k - C). Dependence on the (k - C) value defeats the purpose of the quotient differential element. A workaround for this limitation is to use the harmonics in the excitation winding current instead of the harmonics in the ET traditional differential signal to address the magnetizing current in the quotient differential element.

The ST primary winding connects the source and load buses, and therefore, the ST is exposed to limited voltage across its series winding. As a result, the ST does not draw any significant magnetizing current when the PST is being energized, the system voltage is elevated, or the frequency is decreased.

Faults (external or internal) elevate the series winding current, potentially increasing the voltage across the series winding. The highest possible voltage across the series winding is the system volage, such as during a bolted close-in external fault. Depending on the knee-point voltage of the ST core, the ST may draw an elevated magnetizing current during such conditions. However, the percentage restraint logic provides security during external faults. This is true even if the differential signal increases as a result of the magnetizing current rather than the CT saturation. Therefore, applying the ST differential element without the inrush and overexcitation logic may be considered for better speed, sensitivity, and dependability.

The overall differential element protects both the ST and the ET. Therefore, the element is subject to the inrush and overexcitation conditions associated with the ET. The traditional inrush and overexcitation logic may be used for security of the overall differential element if using this element for tripping. If the element is applied for supervision, it may be used without the inrush and overexcitation logic.

Restricted earth fault (REF) elements improve protection sensitivity for ground faults near the neutral point of the grounded transformer and reactor windings. Apply the REF elements to both ET windings.

The ET excitation winding may use the traditional REF element that balances the $i_{EN}$ neutral current and the zero-sequence current in the sum of the source and load currents ($3i_0$). However, because the excitation winding currents are measured on a per-phase basis, the REF element may be applied on a per-phase basis, such as by balancing the $i_{LA} + i_{SA}$ current against the $i_{EA}$ current in the A-phase and similarly in the B- and C-phases.

The ET regulating winding also operates as a grounded winding, even though the grounding point is not static: the OLTC tap moves it along the winding (see **Figure 2).**

The ET regulating winding is terminated on the delta-connected ST secondary winding. This delta winding acts as an open circuit, as seen from the ET side. Therefore, during external ground faults, no zero-sequence current ($3i_0$) can enter the regulating winding from the ST side. Similarly, no $3i_0$ current can be induced from the excitation winding, even though the five-legged core allows the zero-sequence flux to flow, because the delta winding is an open circuit. The $3i_0$ current flows in the regulating winding only if there is an internal ground fault in the regulating winding or connected elements (the ground fault and the winding grounded neutral point make up the loop that permits the $3i_0$ current induced from the excitation winding to flow).

As a result, the REF element for the ET regulating winding in various embodiments may be an overcurrent element connected to the $i_{RN}$ current.

When the PST is in the neutral position (k = 0 and C = 0, or k = 1 and C = 1), then 1) the ET regulating current is not magnetically coupled to the excitation current and 2) the ST secondary winding becomes grounded. In such a configuration, the 87T(S) element can detect ground faults in the ET regulating winding because during such faults, the measured $i_R$ current does not equal the current flowing toward the ST secondary winding. The sensitivity of this protection may be limited; the REF element for the regulating winding (an overcurrent element that responds to the neutral current $i_{RN}$. The REF element for the excitation winding detects ground faults in the ST series winding and the excitation winding. The 87T(E) element detects these faults as well (see Equations 4 and 5 and note that k - C = 0). The 87T(S) element detects turn and phase faults in the ST series winding because these faults create an unbalance between the phases and change the $i_R$ currents in the 87T(S) element balance Equation 1. The sudden pressure and accumulated gas relays provide backup.

Because of the gaps in the differential protection during neutral PST operation, sudden pressure and accumulated gas relays may be used. Additionally, the PST should not operate in a neutral position for extended periods of time (instead it should be bypassed and de-energized). The PST bypass solves the protection issues and eliminates the ST copper losses and the ET iron losses.

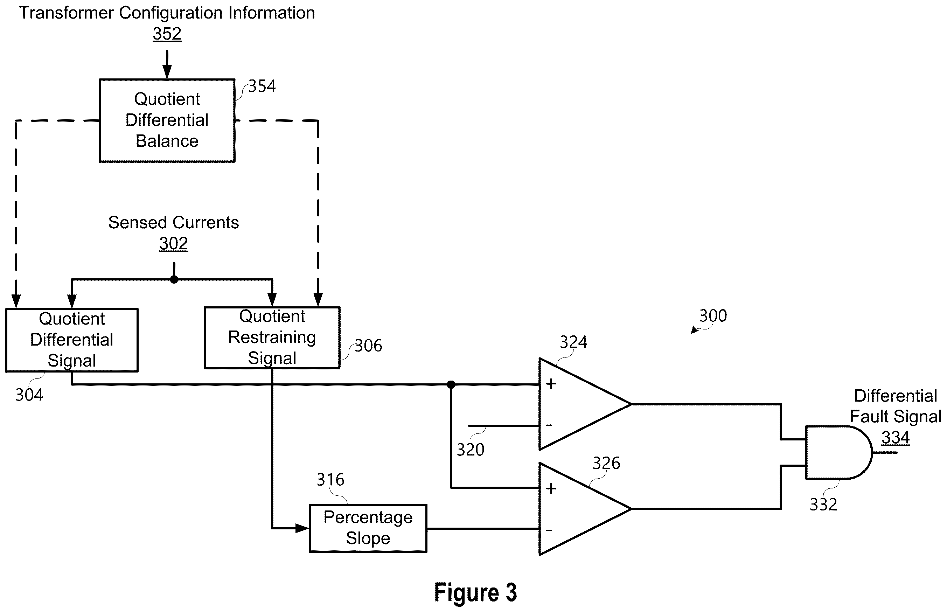

**Figure** 3 illustrates a general logic diagram for detecting a fault using the quotient differential signal and restraining signal as described herein as calculated using the sensed currents 302. Sensed currents 302 may include source, load, excitation winding, regulating winding and other current signals. A fault signal 334 may asserted using the illustrated differential element 300 logic, and the fault signal 334 is used by the IED to determine and effect a protective action, such as signaling CBs 162, 164 to open. The differential element 300 may calculate the quotient differential signal 304 in accordance with several embodiments herein, and compare 324 the quotient differential signal 304 against a threshold 320. Similarly, the element 300 may determine a quotient restraining signal 306 in accordance with the several embodiments herein and compare 326 a product of the signal and a percentage slope 316 with the quotient differential signal 304.

If the quotient differential signal exceeds both 332 the threshold 320 and the percentage slope 316 of the quotient restraining signal 306, then the fault condition is determined and the differential fault signal 334 is asserted. The protective device may then institute a "trip" command to electrically isolate the protected equipment.

As has been discussed above, the quotient differential signal and quotient restraining signal may be calculated using source and load current signals, depending on a configuration of the equipment being protected. Thus, the IED should be configured to use the appropriate quotient differential and restraining signal calculations to provide expected protection. The relevant information about the equipment being protected, such a the transformer configuration information 352 for a dual-core phase-shifting transformer, may be entered into the IED 102 at setting time such. The IED 102 may include a quotient differential balance module 354 for selecting the appropriate function of currents for the quotient restraining signal calculation and the quotient differential signal calculation. The balance module 354 may take into consideration the core configuration of the transformer, the available signals, and the like, as discussed above. The balance module may determine a function (e.g. see Equation 17) to calculate the quotient differential signal and the quotient restraining signal based on a difference between a first quotient of current signals selected from the load-side current signals and source-side current signals for a first loop of the protected equipment (e.g. see right side of Equation 15) and a second quotient of current signals selected from the load-side current signals and source-side current signals for a second loop of the protected equipment (e.g. see right side of Equation 16); that each equal a product of a first ratio and a second ratio under healthy conditions (e.g. see left side of Equations 15 and 16).

The embodiments herein may be used for differential protection of equipment where such ratios are introduced. The ratios may be between the load-side sensed current (via a CT) and source-side sensed current (via a CT). The embodiments herein may be used for differential protection of such equipment even when such ratios are unknown, unreliable, or variable.

The embodiments herein introduce the concept of a quotient differential protection element. This new principle eliminates the need to monitor the tap changer and control switch positions. The quotient differential element responds to the product of the currents rather than their sum and is based on comparing the current-derived turn ratios between the core legs. The embodiments further include a method for restraining the quotient differential element, considering that its differential signal is a nonlinear function of the zone currents.

The quotient differential element embodiments described herein may be described as comparing winding turn ratios between multiple phases and determining a fault condition when the ratios do not balance. For example, Equations 8 and 9 solve for winding turn ratios for two different loops, calculated using source-side and load-side currents. Equation 10 is a balance equation between the ratios. The quotient differential signal represents unbalance in the comparison of the ratios, and may be calculated using products of currents.

The embodiments herein may be used with restricted earth fault protection for the excitation and regulating windings of the excitation transformer. Protecting the excitation winding may be implemented on a per-phase basis. An overcurrent element that uses the neutral-point current can protect the regulating winding and connected leads, including the ST secondary winding, against ground faults.

The embodiments herein improve the functioning of an IED monitoring and protecting a transformer or other equipment in an electric power delivery system. Prior IEDs relied on knowledge of tap changer and control switch positions to account for different ratios between source and load sides. The embodiments described improve the IED by providing differential protection without the need for such signals.

While specific embodiments and applications of the disclosure have been illustrated and described, it is to be understood that the disclosure is not limited to the precise configurations and components disclosed herein. Moreover, principles described herein may also be utilized for distance protection and directional overcurrent protection. Accordingly, many changes may be made to the details of the above-described embodiments without departing from the underlying principles of this disclosure. The scope of the present invention should, therefore, be determined only by the following claims.

**Claims**

1. A protection system for detecting internal faults in dual-core phase shifting transformers comprising,

   a signal acquisition subsystem to obtain source-side and load-side currents
   a differential protection element in communications with the signal acquisition subsystem configured to:

   compare winding turn ratios between multiple phases of the transformer wherein the winding turn ratios are determined using the source-side and load-side currents; and,
   issue a trip command when the comparison indicates that the winding turn ratios differ between the phases.

2. The protection system of claim 1 wherein a balance of the winding turn ratios is expressed as a differential signal comprising a product of transformer currents selected from the source-side and load-side currents.

3. The protection system of claim 1 wherein the dual-core phase shifting transformer comprises a series transformer and an excitation transformer, and the differential protection element is configured detect faults in the series and excitation transformers.

4. The protection system of claim 3 wherein the differential protection element comprises a common protection zone to protect both the series and excitation transformers.

5. The protection system of claim 1 wherein only the load-side and source-side currents are required in the comparison of the winding turn ratios between the multiple phases.

6. The protection system of claim 2 wherein the transformer currents comprise current samples.

7. The protection system of claim 2 wherein the transformer currents comprise current phasors.

8. The protection system of claim 1 further comprising comparing the differential signal with a restraining signal.

9. The protection system in claim 8 wherein the restraining signal is derived as a product of transformer currents selected from the source-side and load-side currents.

10. A protection system for detecting faults in the dual-core phase-shifting transformer comprising:

    a signal acquisition subsystem configured to acquire a plurality of source-side current signals from source-side terminals of the dual-core phase-shifting transformer and load-side current signals from load-side terminals of the dual-core phase-shifting transformer for each phase;
a differential protection element in communication with the signal acquisition subsystem, configured to:

calculate a quotient differential signal as a product of currents selected from the source-side and load-side current signals;
calculate a quotient restraining signal as a product of currents selected from the source-side and load-side current signals; and
determine a fault condition using the calculated quotient differential and quotient restraining signals; and,

a protective action subsystem in communication with the differential protection element, configured to effect a protective action upon determination of the fault condition.

11. The system of claim 10, wherein the quotient differential signal is calculated using only the source-side current signals and the load-side current signals.

12. The system of claim 10, wherein the quotient differential signal comprises an overall quotient differential signal.

13. A system for differential protection of a multi-phase electric power delivery system equipment that introduces a first current ratio and a second current ratio; comprising:

a signal acquisition subsystem configured to acquire a plurality of source-side current signals from each phase of the multi-phase electric power delivery system equipment and load-side current signals each phase of the multi-phase electric power delivery system equipment;
a differential protection element in communication with the signal acquisition subsystem, configured to:

calculate a quotient differential signal as a product of currents selected from the source-side and load-side current signals;
calculate a quotient restraining signal as a product of currents selected from the source-side and load-side current signals; and
determine a fault condition using the calculated quotient differential and quotient restraining signals;

wherein the quotient differential signal is determined as a balance between:

a first quotient of current signals for a first loop of the multi-phase electric power delivery system equipment; and
a second quotient of current signals for a second loop of the multi-phase electric power delivery system equipment;
that each equal a product of the first ratio and the second ratio under healthy conditions; and,

a protective action subsystem in communication with the differential protection element, configured to effect a protective action upon determination of the fault condition.

14. The system of claim 13, wherein the first ratio comprises a ratio between sensed load-side current and current within the multi-phase electric power delivery system equipment and the second ratio comprises a ratio between current within the multi-phase electric power delivery system equipment and sensed source-side current.

15. The system of claim 13, wherein the first ratio comprises a turn ratio of a first current transformer, and the second ratio comprises a turn ratio of a second current transformer.

**Figure 1**

Figure 2

EP 4 773 453 A1

Transformer Configuration Information 352

Quotient Differential Balance 354

Sensed Currents 302

Quotient Differential Signal 304

Quotient Restraining Signal 306

Percentage Slope 316

320

324

326

332

Differential Fault Signal 334

300

**Figure 3**

Europäisches
Patentamt

European
Patent Office

Office européen
des brevets

# EUROPEAN SEARCH REPORT

Application Number

EP 26 15 0116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 865 211 A (SHIJIAZHUANG POWER SUPPLY BRANCH CO STATE GRID HEBEI ELECTRIC POWER CO) 10 October 2023 (2023-10-10) * the whole document * ----- | 1-15 | INV. H02H7/04 |
| A | B. KASZTENNY ET AL: "Modeling and Protection of Hexagonal Phase-Shifting Transformers-Part II: Protection", IEEE TRANSACTIONS ON POWER DELIVERY IEEE SERVICE CENTER, NEW YORK, NY., US, vol. 23, no. 3, 1 July 2008 (2008-07-01), pages 1351-1358, XP011224228, ISSN: 0885-8977, DOI: 10.1109/TPWRD.2007.909217 * the whole document * ----- | 1-15 | |
| A | BRANDON DAVIES: "PC37.245(TM)/D7.3d Draft Guide for the Application of Protective Relaying for Phase-Shifting Transformers", IEEE DRAFT WGDS; 855673031014 IEEE-SA IMEET CENTRAL, PISCATAWAY, NJ USA, vol. C37.245, 12 December 2017 (2017-12-12), pages 1-70, XP068234996, [retrieved on 2021-10-18] * the whole document * ----- | 1-15 | **TECHNICAL FIELDS SEARCHED (IPC)** H02H |

The present search report has been drawn up for all claims

| Place of search | Date of completion of the search | Examiner |
|---|---|---|
| Munich | 20 May 2026 | Trifonov, Antoniy |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 26 15 0116

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2026

| Patent document cited in search report | Publication date | Patent family member(s) | Publication date |
|---|---|---|---|
| CN 116865211 A | 10-10-2023 | NONE | |

EPO FORM P0459

For more details about this annex : see Official Journal of the European Patent Office, No. 12/82